# FASCICULE DE BREVET EUROPEEN

(11) **EP 4 668 772 B1**
(45) Date de publication et mention de la délivrance du brevet: **04.11.2026**
(21) Numéro de dépôt: 25181540.3
(22) Date de dépôt: 09.06.2025
(51) Int. Cl.: H04N 25/60, H04N 25/709, H04N 25/779

(54) **SYSTÈME DE LECTURE D'UNE CHARGE CONTENUE DANS UNE PHOTODIODE D'UN PIXEL ET PROCÉDÉ ASSOCIÉ**
SYSTEM ZUM AUSLESEN EINER IN EINER PHOTODIODE EINES PIXELS ENTHALTENEN LADUNG UND VERFAHREN DAFÜR
SYSTEM FOR READING A CHARGE CONTAINED IN A PHOTODIODE OF A PIXEL AND ASSOCIATED METHOD

(30) Priorité: 19.06.2024 FR 2406537
(43) Date de publication de la demande: 24.12.2025
(73) Titulaire: STMicroelectronics International N.V., 1228 Plan-les-Ouates, Geneva (CH)
(72) Inventeur: SIMONY, Laurent, 38100 Grenoble (FR)
(74) Mandataire: Casalonga

(56) Documents cités:
- US-A1- 2003 034 434
- US-A1- 2010 238 336
- US-A1- 2012 242 879
- US-A1- 2022 182 567

## Description

Des modes de réalisation et de mise en œuvre concernent la lecture d'une charge contenue dans un pixel.

Une matrice de pixels d'un capteur comporte des pixels organisés en lignes et en colonnes.

Il est connu que lorsqu'un pixel est alimenté par un signal d'alimentation bruité, un signal représentatif de la capture optique réalisée par le pixel est bruité (« bruit de ligne ») de sorte que la qualité de l'image générée à partir dudit signal est insuffisante entrainant un défaut d'image.

Afin de minimiser la transmission du bruit du signal d'alimentation, il est connu d'alimenter les pixels à partir d'un régulateur de tension relié à une source d'alimentation délivrant une tension d'alimentation. Par exemple, la demande de brevet US 2010/238336 A1 divulgue un tel régulateur de tension qui alimente le suiveur de tension d'un pixel 4T.

Cependant, le régulateur de tension entraîne une chute de tension de sorte que l'amplitude du signal délivré par les pixels est réduite.

En outre, le régulateur de tension entraîne un surcroît de consommation énergétique et nécessite de prévoir un volume pour son implantation sur un circuit intégré comportant généralement la matrice de pixels.

Ainsi il existe un besoin de supprimer le régulateur de tension tout en minimisant le bruit de ligne de sorte que l'image générée à partir du signal délivré par le pixel est de qualité suffisante.

Les modes de mise en œuvre et de réalisation définis ci-après, sont proposés à ces égards, et permettent la lecture de la charge contenue dans un pixel en minimisant les bruits de ligne sans l'implémentation d'un régulateur de tension.

Selon un aspect, il est proposé un procédé de lecture d'une charge contenue dans une photodiode d'un pixel comportant une entrée d'alimentation, une sortie, un nœud de lecture, la sortie du pixel étant reliée à des moyens de polarisation de la sortie du pixel par l'intermédiaire d'un premier interrupteur, le pixel comprenant en outre un transistor suiveur comportant une grille reliée au nœud de lecture et un drain relié à l'entrée d'alimentation, un transistor de lecture reliant la source du transistor suiveur à la sortie du pixel, l'entrée d'alimentation étant reliée à une capacité de stockage d'énergie et à une première source de tension continue par l'intermédiaire d'un deuxième interrupteur.

Le procédé comporte :
o une première étape de numérisation d'une première valeur du potentiel du nœud de lecture,
o un transfert de la charge contenue dans la photodiode vers le nœud de lecture consécutivement à la première numérisation,
o une deuxième étape de numérisation d'une deuxième valeur du potentiel du nœud de lecture comportant la charge transférée,
o les première et deuxième étapes de numérisations comportant
   - une fermeture du deuxième interrupteur pour charger la capacité de stockage d'énergie,
   - simultanément à la fermeture du deuxième interrupteur, une fermeture du premier interrupteur suivie d'une ouverture du premier interrupteur lorsque la tension de sortie du pixel est établie à une précision d'établissement près,
   - une ouverture du deuxième interrupteur consécutivement à l'ouverture du premier interrupteur, et
   - une numérisation de la valeur du potentiel du nœud de lecture sur la sortie du pixel lorsque les premier et deuxième interrupteurs sont ouverts, le pixel étant alimenté par la capacité de stockage.

Les lectures du signal de sortie du pixel sont effectuées lorsque l'interrupteur d'alimentation est ouvert de sorte que les bruits de ligne transmis par la source d'alimentation continue ne soient pas transmis au pixel, le pixel étant alimenté par la capacité de stockage d'énergie. Le pixel est désolidarisé de l'alimentation fournie par la première source de tension continue pendant la lecture des signaux de sortie du pixel.

Le régulateur de tension connu de l'état de la technique est supprimé sans altérer la qualité des signaux délivrés par le pixel.

En outre, comme le régulateur de tension consommant de la puissance électrique est supprimé, l'énergie électrique délivrée par la source d'alimentation est réduite. En outre, comme le régulateur de tension est supprimé, la chute de tension due au régulateur est supprimée et l'amplitude de sortie du signal peut être augmentée pour gagner en rapport signal/bruit.

Selon un mode de mise en œuvre, les moyens de polarisation comportent une source de courant et le transistor de lecture étant fermé durant les première et deuxième étapes de numérisation, le procédé comprend pour chaque numérisation, une fermeture du premier interrupteur pendant une durée de stabilisation permettant d'établir la tension de sortie du pixel à une précision recherchée près.

Selon un mode de mise en œuvre, la durée entre l'ouverture du premier interrupteur et l'ouverture du deuxième interrupteur est identique lors des première et deuxième étapes de numérisation.

Selon un mode de mise en œuvre, les moyens de polarisation comportent une source de tension, le procédé comportant pour chaque numérisation, une fermeture du premier interrupteur jusqu'à atteindre une précision d'établissement recherchée, une ouverture du premier interrupteur lorsque ladite précision est atteinte, et une fermeture du transistor de lecture.

Selon un mode de mise en œuvre, la durée entre la fermeture du transistor de lecture et l'ouverture du deuxième interrupteur est identique lors des première et deuxième étapes de numérisation.

Selon un autre aspect, il est proposé un système de lecture d'une charge contenue dans une photodiode d'un pixel comportant une entrée d'alimentation, une sortie, un nœud de lecture, le système de lecture comportant en outre des moyens de polarisation de la sortie du pixel, un premier interrupteur, une capacité de stockage d'énergie, et des moyens de commande, la sortie du pixel étant reliée aux moyens de polarisation par l'intermédiaire du premier interrupteur, le pixel comprenant en outre un transistor suiveur comportant une grille reliée au nœud de lecture et un drain relié à l'entrée d'alimentation, un transistor de lecture (14) reliant la source du transistor suiveur à la sortie du pixel, l'entrée d'alimentation étant reliée à la capacité de stockage d'énergie et à une première extrémité d'un deuxième interrupteur, la deuxième extrémité du deuxième interrupteur étant destinée à être reliée à une source de tension continue, et des moyens de commande, les moyens de commande étant configurés pour :
o lors d'une première étape de numérisation, effectuer une première numérisation d'une première valeur du potentiel du nœud de lecture,
o transférer la charge contenue dans la photodiode vers le nœud de lecture consécutivement à la première numérisation,
o lors d'une deuxième étape de numérisation, effectuer une deuxième numérisation d'une deuxième valeur du potentiel du nœud de lecture comportant la charge transférée,
o lors des première et deuxième étapes de numérisation, les moyens de commande étant en outre configurés pour :
   - fermer le deuxième interrupteur pour charger la capacité de stockage d'énergie,
   - simultanément à la fermeture du deuxième interrupteur, fermer le premier interrupteur puis ouvrir le premier interrupteur suite à la fermeture du premier interrupteur lorsque la tension de sortie du pixel est établie à une précision d'établissement recherchée près,
   - ouvrir le deuxième interrupteur consécutivement à l'ouverture du premier interrupteur, et
   - les première et deuxième numérisations de la valeur du potentiel du nœud de lecture sur la sortie du pixel étant effectuées lorsque les premier et deuxième interrupteurs sont ouverts, le pixel étant alimenté par la capacité de stockage.

Selon un mode de réalisation, les moyens de polarisation comportent une source de courant, les moyens de commande étant configurés pour fermer le transistor de lecture, et pour chaque numérisation fermer le premier interrupteur pendant une durée de stabilisation permettant d'établir la tension de sortie du pixel à une précision recherchée près.

Selon un mode de réalisation, la durée entre l'ouverture du premier interrupteur et l'ouverture du deuxième interrupteur est identique lors des première et deuxième étapes de numérisation.

Selon un mode de réalisation, les moyens de polarisation comportent une source de tension, les moyens de commande étant configurés pour chaque numérisation, fermer le premier interrupteur jusqu'à atteindre une précision d'établissement recherchée, ouvrir le premier interrupteur lorsque ladite précision est atteinte, et fermer le transistor de lecture.

Selon un mode de réalisation, la durée entre la fermeture du transistor de lecture et l'ouverture du deuxième interrupteur est identique lors des première et deuxième étapes de numérisation.

Selon encore un autre aspect, il est proposé une colonne de pixels comportant un système tel que défini précédemment et au moins un deuxième pixel identique au premier pixel, la sortie du deuxième pixel étant reliée aux moyens de polarisation par l'intermédiaire du premier interrupteur, l'entrée d'alimentation du deuxième pixel étant reliée à la capacité de stockage d'énergie et à la première extrémité du deuxième interrupteur.

Selon un autre aspect, il est proposé une matrice de pixels comportant au moins une première colonne de pixels telle que définie précédemment et une deuxième colonne de pixels telle que définie précédemment.

Selon un mode de réalisation, la capacité de stockage d'énergie de la première colonne de pixels et la capacité de stockage d'énergie de la deuxième colonne de pixels sont regroupées dans une capacité de stockage commune.

D'autres avantages et caractéristiques de l'invention apparaîtront à l'examen de la description détaillée de modes de réalisation et de mise en œuvre, et des dessins annexés sur lesquels les figures :
[Fig.1] ;
[Fig.2] ;
[Fig.3] ;
[Fig.4] ;
[Fig.5] ;
[Fig 6];
   illustrent des modes de réalisation et de mise en œuvre de l'invention.

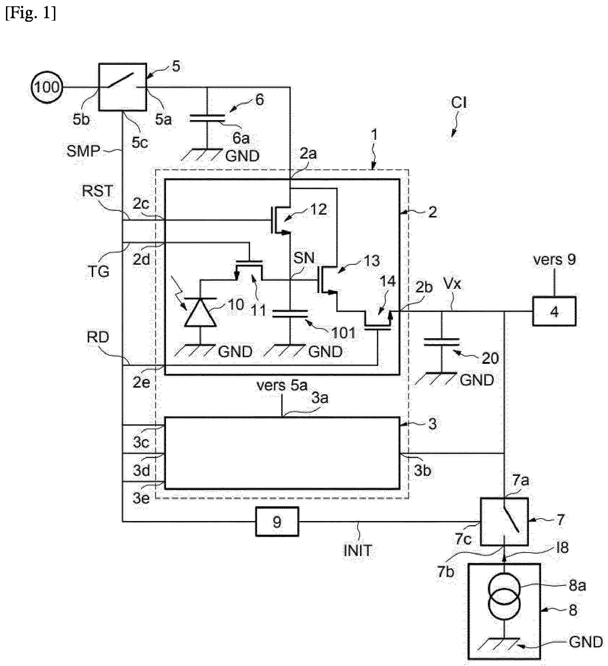

La figure 1 illustre schématiquement un premier exemple d'un circuit intégré CI comportant une colonne 1 de pixels et un convertisseur 4.

La colonne 1 comprend une pluralité de pixels 2, 3 identiques.

Pour des raisons de clarté, seuls deux pixels 2, 3 sont représentés.

Bien entendu, la colonne 1 peut comporter plus de deux pixels.

Le circuit intégré CI comporte en outre un premier interrupteur 7, un deuxième interrupteur 5, une capacité de stockage 6 d'énergie, des moyens de polarisation 8 et des moyens de commande 9.

Une capacité 20 est reliée entre la sortie 2b du premier pixel 2 et la masse GND.

Le convertisseur 4 est contrôlé par les moyens de commande 9.

Une première extrémité 5a du deuxième interrupteur 5 est reliée à la capacité de stockage 6 et à une entrée d'alimentation 2a, 3a de chaque pixel 2, 3 de la colonne 1.

La deuxième extrémité 5b du deuxième interrupteur 5 est reliée à une source 100 de tension continue.

Le premier interrupteur 5 comporte en outre une entrée de commande contrôlée par les moyens de commande 9.

Une première extrémité 7a du premier interrupteur 7 est reliée à une sortie 2b, 3b de chaque pixel 2, 3 de la colonne 1.

Une deuxième extrémité 7b du premier interrupteur 7 est reliée aux moyens de polarisation 8.

Le premier interrupteur 7 est contrôlé par les moyens de commande 9.

Les moyens de polarisation 8 comportent une source de courant 8a délivrant un courant I8.

Chaque pixel 2, 3 comprend en outre une entrée d'initialisation 2c, 3c, une entrée de transfert de charge 2d, 3d et une entrée de lecture (sélection de ligne) 2e, 3e.

Les entrées d'initialisation 2c, 3c, de transfert de charge 2d, 3d et de lecture 2e, 3e sont contrôlés par les moyens de commande 9.

Comme les pixels 2, 3 sont identiques, seul un premier pixel 2 est détaillé dans ce qui suit.

Le premier pixel 2 comprend une photodiode pincée 10 comportant une anode reliée à la masse GND et un transistor de transfert 11 de charge comportant une source connectée à la cathode de la photodiode 10, un drain connecté à un nœud de lecture SN flottant du premier pixel 2 et une grille reliée à l'entrée de transfert 2d.

Le premier pixel 2 comporte en outre un transistor d'initialisation 12 comportant un drain connecté à l'entrée d'alimentation 2a du premier pixel 2, une source connectée au nœud de lecture SN et une grille reliée à l'entrée d'initialisation 2c.

En variante, le drain du transistor d'initialisation 12 peut être connecté à une source de tension différente de la source 100 de tension continue.

Le premier pixel 2 comporte une capacité 101 connectée entre le nœud de lecture SN flottant et la masse GND.

Le premier pixel 2 comporte un transistor suiveur 13 comportant un drain relié à l'entrée d'alimentation 2a du premier pixel 2, une grille reliée au nœud de lecture flottant SN.

Le premier pixel 2 comporte en outre un transistor de lecture 14 comportant un drain relié à la source du transistor suiveur 13, une source reliée à la sortie 2b du premier pixel 2 et une grille reliée à l'entrée de lecture 2e du premier pixel 2.

Les transistors de transfert 11, d'initialisation 12 et de lecture 14 sont par exemple des transistors à effet de champ de type à grille isolée MOS « metal-oxide-semiconductor field-effect transistor » en anglais de type N, le premier pixel 2 comportant quatre transistors.

L'invention s'applique à tout pixel tel que défini dans les revendications comportant au moins une photodiode pincée, un transistor de transfert, un transistor d'initialisation, un transistor de lecture et un transistor suiveur de type NMOS.

Les pixels 2, 3, la capacité de stockage d'énergie 6, les moyens de polarisation 8, le convertisseur 4, le premier interrupteur 7, le deuxième interrupteur 5 et les moyens de commande 9 forment un système de lecture d'une charge contenue dans une photodiode 10 des pixels 2, 3 de la colonne 1.

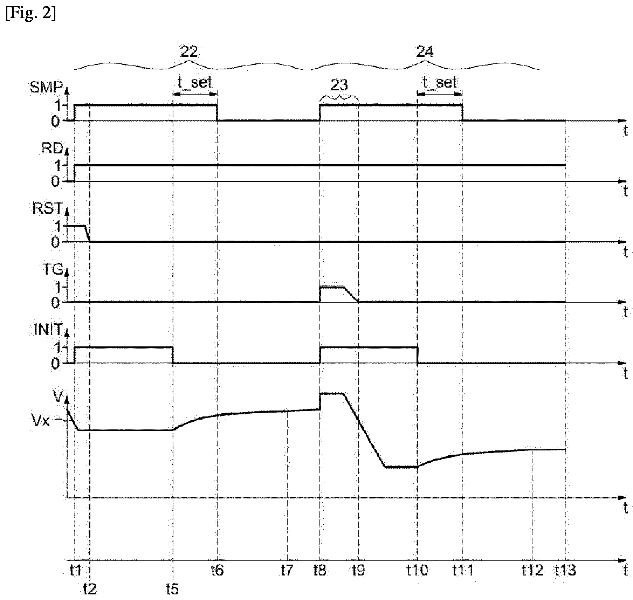

La figure 2 illustre un chronogramme d'un exemple du procédé de lecture mettant en œuvre le système de numérisation illustré à la figure 1.

On suppose dans ce qui suit que seule la charge contenue dans la photo diode 10 du premier pixel 2 est lue.

Un transistor fermé est passant et un transistor ouvert n'est pas passant.

Bien entendu, la lecture de la valeur de la charge contenue dans la photo diode 10 en un code digital telle que décrit dans ce qui suit s'applique à l'ensemble des pixels de la colonne 1.

Le chronogramme illustre un exemple d'évolution temporelle de signaux SMP, INIT, TG, RST, RD de commande délivrés par les moyens de commande 9, et du signal V_{X} délivré sur la sortie 2b du pixel 2.

On note SMP le signal de commande du deuxième interrupteur 5, INIT le signal de commande du premier interrupteur 7, TG le signal de commande du transistor de transfert 11, RST le signal de commande du transistor d'initialisation 12 et RD le signal de commande du transistor de lecture 14.

Le procédé comporte la sélection du premier pixel 2 par le passage à l'état haut du signal RD appliqué sur l'entrée de lecture 2e dudit pixel 2, une première étape de numérisation 22 d'une première valeur du potentiel du nœud de lecture SN, un transfert de la charge 23 contenue dans la photodiode 10 vers le nœud de lecture SN consécutivement à la première numérisation, et une deuxième étape de numérisation 24 d'une deuxiéme valeur du potentiel du noeud de lecture SN comportant la charge transférée.

Des étapes de numérisation 22, 24 sont effectuées par le convertisseur 4.

Les première et deuxième étapes de numérisations 22, 24 comportent :
- une fermeture du deuxième interrupteur 5 pour charger la capacité de stockage d'énergie 6, et
- simultanément à la fermeture du deuxième interrupteur 5, une fermeture du premier interrupteur 7 et une ouverture du premier interrupteur lorsque la tension de sortie du pixel est établie à une précision donnée. L'établissement de la tension de sortie du pixel à une précision recherchée près constitue une condition initiale déterministe et indispensable pour obtenir un signal de sortie du pixel 2 déterministe par différence des première et deuxième étapes de numérisation 22, 24,
- une ouverture du deuxième interrupteur 5 consécutivement à l'ouverture du premier interrupteur 7, et
- une numérisation de la valeur du potentiel du nœud de lecture SN sur la sortie 2b du pixel lorsque les premier et deuxième interrupteurs 7 et 5 sont ouverts, le pixel étant alimenté par la capacité de stockage.

Les numérisations du signal de sortie du pixel sont effectuées lorsque l'interrupteur d'alimentation est ouvert de sorte que les bruits transmis par la source d'alimentation continue ne soient pas transmis au pixel, le pixel étant alimenté par la capacité de stockage d'énergie. Le pixel est désolidarisé de l'alimentation fournie par la première source de tension continue pendant la lecture des signaux de sortie du pixel empêchant la création d'un bruit de ligne dû au bruit de la source 100.

Le régulateur de tension connu de l'état de la technique est supprimé sans altérer la qualité des signaux délivrés par le pixel.

En outre, comme le régulateur de tension est supprimé, la chute de tension due au régulateur est supprimée et l'amplitude de sortie du signal peut être augmentée pour gagner en rapport signal/bruit.

La précision donnée près est déterminée de manière à ne pas dégrader la qualité d'image recherchée.

A présent sont détaillés les première et deuxième étapes de numérisation 22, 24 et l'étape de transfert 23.

Durant la première étape de numérisation 22, à un instant t1, le deuxième interrupteur 5 est fermé (SMP à l'état haut) pour charger la capacité de stockage 6 et alimenter les pixels de la colonne 1, le premier interrupteur 7 est fermé (INIT à l'état haut), le transistor d'initialisation 12 est fermé (RST à l'état haut) pour initialiser le nœud de lecture SN du premier pixel 2 et le transistor de lecture 14 est fermé (RD à l'état haut).

A un instant t2, le transistor d'initialisation 12 est ouvert (RST à l'état bas).

A un instant t5, lorsque la tension de sortie V_{X} du pixel 2 est établie à une précision d'établissement recherchée près, le premier interrupteur de réinitialisation 7 est ouvert (INIT à l'état bas).

La précision d'établissement est prédéterminée à partir de la précision recherchée pour le capteur.

Entre les instants t1 et t5, le transistor de lecture 14 et le premier interrupteur 7 sont simultanément fermés pendant une durée de d'établissement permettant d'établir à la précision d'établissement recherchée près la tension de sortie Vx du premier pixel 2.

A partir de l'instant t5, le courant consommé par le pixel 2 diminue rapidement. Lorsque le courant consommé par le premier pixel 2 est suffisamment faible pour pouvoir être délivré par la capacité de stockage 6 à l'appréciation de l'homme du métier, à un instant t6, le deuxième interrupteur d'alimentation 5 est ouvert (SMP à l'état bas). Les pixels 2, 3 sont alimentés par la capacité de stockage 6.

La durée entre l'ouverture du premier interrupteur 7 consécutive à la fermeture du premier interrupteur 7 (instant t5) et l'ouverture du deuxième interrupteur 5 (instant t6) est référencé t_set. Le courant consommé par le pixel 2 correspond à la charge de la capacité 20 relié à la sortie 2b du premier pixel 2 par le transistor suiveur 13. Le courant consommé diminue rapidement au cours du temps. La durée t_set est choisie de manière à ce que le courant nécessaire pour alimenter le premier pixel 2 pendant la durée de numérisation puisse être délivré par la capacité de stockage 6 d'énergie, sans dépolariser le transistor suiveur 13 du premier pixel 2.

A un instant t7 lors d'une première numérisation de la première étape de numérisation 22, suivant l'instant t6, le convertisseur 4 numérise le signal V_{X} représentatif d'une première valeur du potentiel du nœud de lecture SN et d'un décalage du système.

Lorsque le signal de sortie du convertisseur 4 représentatif du potentiel de référence du signal SN est délivré, l'étape de transfert de charge 23 et la deuxième étape de numérisation 24 débutent à un instant t8.

A l'instant t8, le deuxième interrupteur 5 est fermé pour charger la capacité de stockage 6 et alimenter les pixels de la colonne 1, le premier interrupteur 7 est fermé, le transistor de transfert 11 est passant (TG à l'état haut) pour transférer la charge contenue dans la photo diode 10 vers le nœud de lecture SN.

A un instant t9, lorsque la charge a été transférée de la photo diode 10 vers le nœud SN, le transistor de transfert 11 est ouvert (TG à l'état bas).

A un instant t10, lorsque la tension de sortie V_{X} du pixel 2 est établie à la précision d'établissement recherchée près, le premier interrupteur 7 est ouvert.

A un instant t11, le deuxième interrupteur 5 est ouvert. Les pixels 2, 3 sont alimentés par la capacité de stockage 6.

La durée entre l'ouverture du premier interrupteur 7 consécutive à la fermeture du premier interrupteur 7 (instant t10) et l'ouverture du deuxième interrupteur 5 (instant t11) est égale à la durée t_set entre les instants t5 et t6.

La durée t_set permet d'obtenir un courant consommé par le premier pixel 2 suffisamment faible de sorte que la capacité de stockage 6 soit en mesure d'alimenter le premier pixel 2 sans désaturer le transistor suiveur 13.

L'égalité des durées entre les instants t5et t6 et entre les instants t10 et t11 permet de garantir des évolutions identiques du signal Vx du pixel 2 à partir des instants t5 et t10 pour empêcher l'apparition de décalages en tension lors de la détermination la différence des deux numérisations par le convertisseur 4.

A un instant t12, lorsque le deuxième interrupteur d'alimentation 5 est ouvert (SMP à l'état bas), le convertisseur 4 numérise le signal V_{X} représentatif d'une deuxième valeur du potentiel du nœud de lecture SN comportant la charge transférée et d'un décalage du système.

Par exemple, l'instant t12 est défini de sorte que la durée entre les instants t7et t6 soit égale à la durée entre les instants t11 et t12.

La précision d'établissement recherchée aux instants t5 et t10 définit respectivement la précision du signal obtenu par différence du signal Vx aux instants t7 et t12.

De manière connue, le convertisseur 4 peut en outre effectuer la soustraction entre les résultats de la première et de la deuxième numérisation (opération classique de double échantillonnage corrélé) de sorte que le décalage du système s'élimine et le résultat soit proportionnel à la charge transférée lors de l'étape 23.

La durée entre les instants t5 et t6 est par exemple égale à la durée entre les instants t10 et t11.

A partir des signaux V_{X} délivrés lors des première et deuxième numérisations, la valeur de la charge stockée dans la photo diode 10 lors de la capture d'un signal lumineux par ladite diode est numérisée.

La capacité 6, la durée entre les instants t1 et t6 et la durée entre les instants t8 et t11 sont choisies de sorte que la capacité 6 soit en mesure d'alimenter les pixels 2, 3 lorsque le deuxième interrupteur 5 est ouvert.

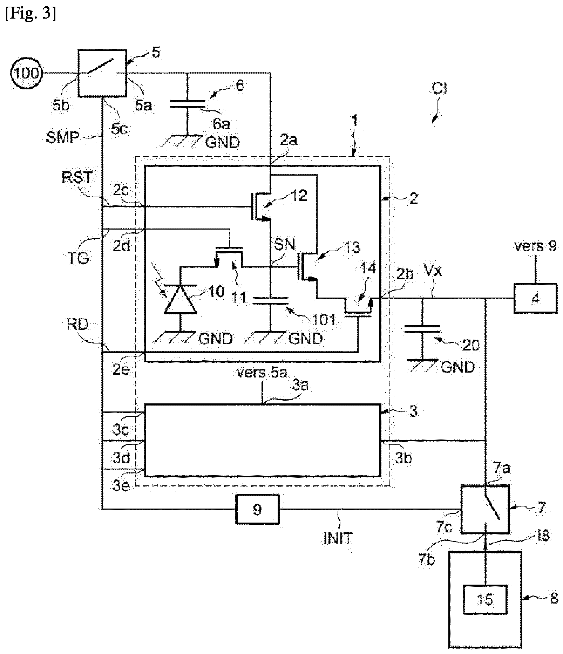

La figure 3 illustre un deuxième exemple du circuit intégré CI.

Le deuxième du circuit intégré CI diffère du premier exemple du circuit intégré CI illustré à la figure 1 en ce que le circuit intégré CI comporte un deuxième mode de réalisation des moyens de polarisation 8, les moyens de polarisation 8 comportant une source de tension 15 reliée à la deuxième extrémité 7b du premier interrupteur.

La source de tension 15 délivre une tension pouvant être par exemple nulle.

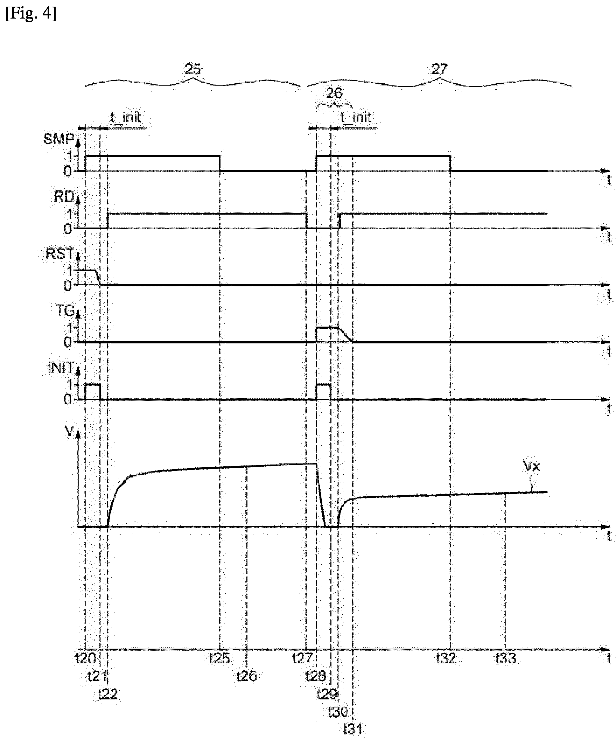

La figure 4 illustre un chronogramme d'un exemple du procédé de lecture mettant en œuvre le système de numérisation illustré à la figure 3 du deuxième exemple du circuit intégré CI.

On suppose dans ce qui suit que seule la charge contenue dans la photo diode 10 du premier pixel 2 est lue.

Le chronogramme illustre un exemple d'évolution temporelle des signaux SMP, INIT, TG, RST, RD

Le procédé comporte une première étape de numérisation 25 d'une première valeur du potentiel du nœud de lecture SN, un transfert de la charge 26 contenue dans la photodiode 10 vers le nœud de lecture SN consécutivement à une première numérisation de la première étape de numérisation 25, et une deuxième numérisation d'une deuxième étape de numérisation 27 d'une deuxième valeur du potentiel du nœud de lecture SN comportant la charge transférée.

Les première et deuxième numérisations sont effectuées par le convertisseur 4.

Les première et deuxième étapes de numérisations 25, 27 comportent :
- une fermeture du deuxième interrupteur 5 pour charger la capacité de stockage d'énergie 6,
- simultanément à la fermeture du deuxième interrupteur 5, une fermeture du premier interrupteur 7 et une ouverture du premier interrupteur lorsque la tension de sortie du pixel est établie,
- une fermeture de l'interrupteur de lecture 14 (commandé par RD), cette fermeture devant être non-recouvrante avec celle de l'interrupteur 7,
- une ouverture du deuxième interrupteur 5 consécutivement à l'ouverture du premier interrupteur 7, et
- une numérisation de la valeur du potentiel du nœud de lecture SN sur la sortie 2b du pixel lorsque les premier et deuxième interrupteurs 5 sont ouverts, le pixel étant alimenté par la capacité de stockage 6.

Comme décrit précédemment, les lectures du signal de sortie du pixel sont effectuées lorsque l'interrupteur d'alimentation est ouvert de sorte que les bruits de ligne transmis par la source d'alimentation continue ne soient pas transmis au pixel, le pixel étant alimenté par la capacité de stockage d'énergie. Le pixel est désolidarisé de l'alimentation fournie par la première source de tension continue pendant la lecture des signaux de sortie du pixel.

Le régulateur de tension connu de l'état de la technique est supprimé sans altérer la qualité des signaux délivrés par le pixel.

En outre, comme le régulateur de tension consommant de la puissance électrique est supprimé, l'énergie électrique délivrée par la source d'alimentation est réduite. En outre, comme le régulateur de tension est supprimé, la chute de tension due au régulateur est supprimée et l'amplitude de sortie du signal peut être augmentée pour gagner en rapport signal/bruit.

A présent sont détaillés les première et deuxième étapes de numérisations 25, 27 et l'étape de transfert 26.

Durant la première étape de numérisation 25, à un instant t20, le deuxième interrupteur 5 est fermé pour charger la capacité de stockage 6 et alimenter les pixels de la colonne 1, le premier interrupteur 7 est fermé pour initialiser Vx à la masse GND, le transistor d'initialisation 12 est fermé pour initialiser le nœud de lecture SN du premier pixel 2.

En outre, le transistor de transfert 11 est ouvert (TG à l'état bas) et le transistor de lecture 14 est ouvert.

A un instant t21, lorsque la tension de sortie V_{X} du pixel 2 est établie à la tension imposée par le générateur de tension 15 à une précision d'établissement recherchée près, le premier interrupteur de réinitialisation 7 est ouvert (INIT à l'état bas).

La précision d'établissement est prédéterminée à partir de la précision recherchée pour le capteur.

La durée de fermeture de l'interrupteur de réinitialisation 7 entre les instants t20 et t21 est référencée t_init.

A un instant t22, lorsque le transistor d'initialisation 12 est ouvert, le transistor de lecture 14 est fermé (signal RD).

L'interrupteur de lecture 14 est fermé suite à l'ouverture du premier interrupteur 7 de sorte que le premier interrupteur et l'interrupteur de lecture 14 ne sont pas fermés simultanément (sans recouvrement) pour empêcher une liaison électrique directe entre la source 100 et la masse GND.

Le transistor suiveur 13 recharge la capacité 20 à travers le transistor de lecture 14 jusqu'à une tension représentative du potentiel du nœud SN.

A un instant t25, lorsque la capacité 6 est en mesure d'alimenter les pixels 2, 3 entre les instants t22 et un instant t28, le deuxième interrupteur 5 est ouvert. Les pixels 2, 3 sont alimentés par les moyens de stockage 6.

A un instant t26 entre l'instant t25 et un instant t27, le convertisseur 4 numérise le signal V_{X} représentatif d'une première valeur du potentiel du nœud de lecture SN et d'un décalage du système.

La première numérisation de la première étape de numérisation 25 est effectuée à l'instant t26 entre les instants t25 et t27.

Lorsque le signal de sortie du convertisseur 4 représentatif du potentiel de référence du signal SN est délivré, à l'instant t26, le transistor de lecture 14 est ouvert.

L'étape de transfert de charge 26 et la deuxième étape de numérisation 27 débutent à l'instant t28.

A un instant t28, le deuxième interrupteur 5 est fermé pour charger la capacité de stockage 6 et alimenter les pixels de la colonne 1, le premier interrupteur 7 est fermé, le transistor de transfert 11 est fermé pour transférer la charge contenue dans la photo diode 10 vers le nœud SN.

L'interrupteur de lecture 14 est ouvert avant la fermeture du premier interrupteur 7 de sorte que le premier interrupteur 7 et l'interrupteur de lecture 14 ne sont pas fermés simultanément (sans recouvrement).

A un instant t29, le premier interrupteur 7 est ouvert.

La durée entre la fermeture de l'interrupteur de lecture 14 et l'ouverture du deuxième interrupteur 5 est identique lors des première et deuxième numérisations.

A un instant t30 consécutif à t29, le transistor de lecture 14 est fermé.

A un instant t31, lorsque la charge a été transférée de la photo diode 10 vers le nœud SN, l'interrupteur de transfert 11 est ouvert.

A un instant t32, le deuxième interrupteur d'alimentation 5 est ouvert. Les pixels 2, 3 sont alimentés par la capacité de stockage 6.

A un instant t33, lorsque le deuxième interrupteur d'alimentation 5 est ouvert (SMP à l'état bas), le convertisseur 4 numérise le signal V_{X} représentatif d'une deuxième valeur du potentiel du nœud de lecture SN comportant la charge transférée

La deuxième numérisation de la deuxième étape de numérisation 27 est effectuée à l'instant t33.

De manière connue, le convertisseur 4 peut en outre effectuer la soustraction entre les résultats de la première et de la deuxième numérisation (opération classique de double échantillonnage corrélé) de sorte que le décalage du système s'élimine et le résultat est proportionnel à la charge transférée lors de l'étape 26.

La durée entre les instants t22 et t25 est égale à la durée entre les instants t30 et t32.

La durée entre les instants t25 et t26 est égale à la durée entre les instants t32 et t33.

A partir des signaux V_{X} délivrés lors des première et deuxième numérisations, la valeur de la charge stockée dans la photo diode 10 lors de la capteur d'un signal lumineux par ladite diode est déterminée.

Les lectures du signal de sortie du premier pixel 2 sont effectuées lorsque l'interrupteur d'alimentation 5 est ouvert de sorte que les bruits de ligne transmis par la source 100 ne sont pas transmis aux pixels 2, 3, les pixels 2, 3 étant alimentés par les moyens 6.

Le régulateur de tension connu de l'état de la technique est supprimé sans altérer la qualité des signaux délivrés par les pixels 2, 3.

Comme le régulateur de tension est supprimé, l'amplitude de variation du signal (« swing ») de sortie du pixel est augmentée et par conséquent le rapport signal sur bruit dudit signal est augmenté.

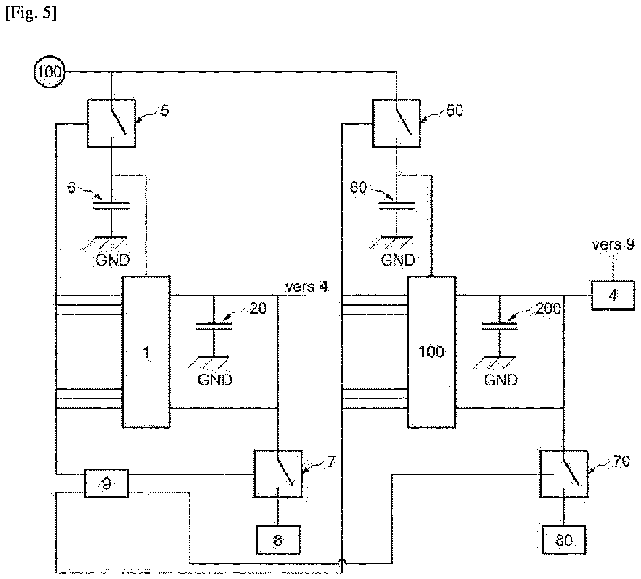

La figure 5 illustre un premier exemple de matrice de pixels.

La matrice comporte la première colonne 1 de pixels et une deuxième colonne 100 de pixels identique à la première colonne 1.

Bien entendu la matrice de pixels peut comprendre plus de deux colonnes de pixels.

La première colonne 1 de pixels est reliée aux premier et deuxième interrupteurs 5, 7, à la capacité de stockage 6, aux moyens de polarisation 8, aux moyens de commande 9, à la capacité 20 et au convertisseur 4 tels que décrit précédemment.

La deuxième colonne 100 de pixels est reliée à des premier et deuxième interrupteurs 50, 70, à une capacité de stockage 60, à des moyens de polarisation 80, aux moyens de commande 9, à une capacité 200 et au convertisseur 4.

Le premier interrupteur 70 relie les moyens de polarisation 80 aux sorties des pixels de la deuxième colonne 100 et est commandé par les moyens de commande 9, la capacité 200 relie les sorties des pixels de la deuxième colonne 100 à la masse GND. Les sorties des pixels sont en outre reliées au convertisseur 4.

Le deuxième interrupteur 50 relie la source 100 aux entrées d'alimentation des pixels de la deuxième colonne 10 et est commandé par les moyens de commande 9.

Les entrées d'alimentation des pixels de la deuxième colonne 100 sont en outre reliées à la masse GND par l'intermédiaire de la capacité de stockage 60.

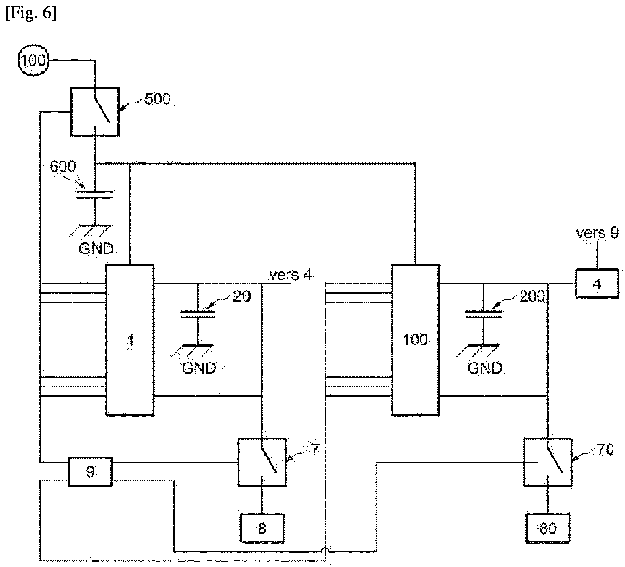

La figure 6 illustre un deuxième exemple de matrice de pixels.

Le deuxième exemple diffère du premier exemple de la matrice illustré à la figure 5 en ce que les entrées d'alimentation des pixels de la deuxième colonne 100 sont reliées aux entrées d'alimentation des pixels de la première colonne 1, la matrice comportant un deuxième interrupteur 500 commun aux colonnes 1, 2 et une capacité de stockage 600 commune aux colonnes 1, 2, la capacité de stockage 600 commune regroupant les capacités de stockage 6 et 60 des première et deuxième colonne 1, 10.

## Revendications

1. Procédé de lecture d'une charge contenue dans une photodiode (10) d'un pixel (2) comportant une entrée d'alimentation (2a), une sortie (2b), un nœud de lecture (SN), la sortie (2b) du pixel étant reliée à des moyens de polarisation (8) de la sortie (2b) du pixel (2) par l'intermédiaire d'un premier interrupteur (7), le pixel comprenant en outre un transistor suiveur (13) comportant une grille reliée au nœud de lecture (SN) et un drain relié à l'entrée d'alimentation, un transistor de lecture (14) reliant la source du transistor suiveur (13) à la sortie (2b) du pixel (2), l'entrée d'alimentation étant reliée à une capacité de stockage d'énergie (6) et à une source de tension continue (100) par l'intermédiaire d'un deuxième interrupteur (5), le procédé comportant :
o une première étape de numérisation d'une première valeur du potentiel du nœud de lecture (SN),
o un transfert de la charge (23, 26) contenue dans la photodiode (10) vers le nœud de lecture (SN) consécutivement à la première numérisation,
o une deuxième étape de numérisation d'une deuxième valeur du potentiel du nœud de lecture (SN) comportant la charge transférée,
o les première et deuxième étapes de numérisation comportant :
- une fermeture du deuxième interrupteur (5) pour charger la capacité de stockage d'énergie (6),
- simultanément à la fermeture du deuxième interrupteur (5), une fermeture du premier interrupteur (7) suivie d'une ouverture du premier interrupteur lorsque la tension de sortie du pixel est établie à une précision d'établissement recherchée près,
- une ouverture du deuxième interrupteur (5) consécutivement à l'ouverture du premier interrupteur (7), et
- une numérisation de la valeur du potentiel du nœud de lecture (SN) sur la sortie (2b) du pixel lorsque les premier et deuxième interrupteurs sont ouverts, le pixel étant alimenté par la capacité de stockage.

2. Procédé selon la revendication 1, les moyens de polarisation (8) comportant une source de courant (8a), le transistor de lecture (14) étant fermé durant les première et deuxième étapes de numérisation, le procédé comprenant pour chaque numérisation, une fermeture du premier interrupteur (7) pendant une durée de stabilisation permettant d'établir la tension de sortie du pixel à une précision recherchée près.

3. Procédé selon la revendication 2, dans lequel la durée (t_set) entre l'ouverture du premier interrupteur (t5, t10) et l'ouverture du deuxième interrupteur (t6, t11) est identique lors des première et deuxième étapes de numérisation.

4. Procédé selon la revendication 1, les moyens de polarisation (8) comportant une source de tension (15), le procédé comportant pour chaque numérisation, une fermeture du premier interrupteur (t20, t28) jusqu'à atteindre une précision d'établissement recherchée, une ouverture du premier interrupteur (t21, t29) lorsque ladite précision est atteinte, et une fermeture du transistor de lecture (14).

5. Procédé selon la revendication 4, dans lequel la durée entre la fermeture du transistor de lecture (t22, t30) et l'ouverture du deuxième interrupteur (t25, t32) est identique lors des première et deuxième étapes de numérisation.

6. Système de lecture d'une charge contenue dans une photodiode (10) d'un pixel (2) comportant une entrée d'alimentation (2a), une sortie (2b), un nœud de lecture (SN), le système de lecture comportant en outre des moyens de polarisation (8) de la sortie (2b) du pixel (2), un premier interrupteur (7), une capacité de stockage d'énergie (6), et des moyens de commande (9), la sortie (2b) du pixel (2) étant reliée aux moyens de polarisation (8) par l'intermédiaire du premier interrupteur (7), le pixel comprenant en outre un transistor suiveur (13) comportant une grille reliée au nœud de lecture (SN) et un drain relié à l'entrée d'alimentation (2a), un transistor de lecture (14) reliant la source du transistor suiveur (13) à la sortie (2b) du pixel (2), l'entrée d'alimentation (2a) étant reliée à la capacité de stockage d'énergie (6) et à une première extrémité d'un deuxième interrupteur (5), la deuxième extrémité du deuxième interrupteur (5) étant destinée à être reliée à une source de tension continue (100), et des moyens de commande (9), les moyens de commande étant configurés pour :
o lors d'une première étape de numérisation, effectuer une première numérisation d'une première valeur du potentiel du nœud de lecture (SN),
o transférer la charge (23, 26) contenue dans la photodiode (10) vers le nœud de lecture (SN) consécutivement à la première numérisation,
o lors d'une deuxième étape de numérisation, effectuer une deuxième numérisation d'une deuxième valeur du potentiel du nœud de lecture (SN) comportant la charge transférée,
o lors des première et deuxième étapes de numérisation, les moyens de commande étant en outre configurés pour :
- fermer le deuxième interrupteur (5) pour charger la capacité de stockage d'énergie (6),
- simultanément à la fermeture du deuxième interrupteur (5), fermer le premier interrupteur (7) puis ouvrir le premier interrupteur suite à la fermeture du premier interrupteur lorsque la tension de sortie du pixel est établie à une précision d'établissement recherchée près,
- ouvrir le deuxième interrupteur (5) consécutivement à l'ouverture du premier interrupteur (7), et
- les première et deuxième numérisations, de la valeur du potentiel du nœud de lecture (SN) sur la sortie (2b) du pixel étant effectuées lorsque les premier et deuxième interrupteurs (5) sont ouverts, le pixel étant alimenté par la capacité de stockage.

7. Système selon la revendication 6, dans lequel les moyens de polarisation (8) comportent une source de courant (8a), les moyens de commande (9) étant configurés pour fermer le transistor de lecture (14), et pour chaque numérisation fermer le premier interrupteur (7) pendant une durée de stabilisation permettant d'établir la tension de sortie du pixel à une précision recherchée près.

8. Système selon la revendication 7, dans lequel la durée (t_set) entre l'ouverture du premier interrupteur (7) et l'ouverture du deuxième interrupteur (5) est identique lors des première et deuxième étapes de numérisation.

9. Système selon la revendication 6, dans lequel les moyens de polarisation (8) comportant une source de tension (15), les moyens de commande (9) étant configurés pour chaque numérisation, fermer le premier interrupteur (7) jusqu'à atteindre une précision d'établissement recherchée, ouvrir le premier interrupteur (7) lorsque ladite précision est atteinte, et fermer le transistor de lecture (14).

10. Système selon la revendication 9, dans lequel la durée entre la fermeture du transistor de lecture (14) et l'ouverture du deuxième interrupteur (5) est identique lors des première et deuxième étapes de numérisation.

11. Colonne (1) de pixels comportant un système selon l'une des revendications 6 à 10 et au moins un deuxième pixel (3) identique au premier pixel (2), la sortie (3b) du deuxième pixel (3) étant reliée aux moyens de polarisation (8) par l'intermédiaire du premier interrupteur (7), l'entrée d'alimentation (3a) du deuxième pixel (3) étant reliée à la capacité de stockage d'énergie (6) et à la première extrémité (5a) du deuxième interrupteur (5).

12. Matrice de pixels comportant au moins une première colonne de pixels selon la revendication 11 et une deuxième colonne de pixels selon la revendication 11.

13. Matrice selon la revendication 12, dans laquelle la capacité de stockage d'énergie de la première colonne de pixels et la capacité de stockage d'énergie de la deuxième colonne de pixels sont regroupées dans une capacité de stockage commune (600).

## Patentansprüche

1. Verfahren zum Auslesen einer Ladung, die in einer Fotodiode (10) eines Pixels (2) enthalten ist, das einen Stromversorgungseingang (2a), einen Ausgang (2b) und einen Leseknoten (SN) aufweist, wobei der Ausgang (2b) des Pixels über einen ersten Schalter (7) mit Polarisationsmitteln (8) des Ausgangs (2b) des Pixels (2) verbunden ist, wobei das Pixel ferner einen Folgetransistor (13), der ein mit dem Ausleseknoten (SN) verbundenes Gate und ein mit dem Stromversorgungseingang verbundenes Drain aufweist, und einen Auslesetransistor (14) umfasst, der die Source des Folgetransistors (13) mit dem Ausgang (2b) des Pixels (2) verbindet, wobei der Stromversorgungseingang über einen zweiten Schalter (5) mit einer Energiespeicherkapazität (6) und einer Gleichspannungsquelle (100) verbunden ist, wobei das Verfahren aufweist:
∘ einen ersten Schritt des Digitalisierens eines ersten Wertes des Potenzials des Ausleseknotens (SN),
∘ Übertragen der in der Fotodiode (10) enthaltenen Ladung (23, 26) an den Ausleseknoten (SN) im Anschluss an das erste Digitalisieren,
∘ einen zweiten Schritt des Digitalisierens eines zweiten Wertes des Potenzials des Ausleseknotens (SN), der die übertragene Ladung aufweist,
∘ wobei der erste und der zweite Digitalisierungsschritt Folgendes aufweisen:
- Schließen des zweiten Schalters (5), um die Energiespeicherkapazität (6) aufzuladen,
- gleichzeitig mit dem Schließen des zweiten Schalters (5), Schließen des ersten Schalters (7), gefolgt von einem Öffnen des ersten Schalters, wenn die Ausgangsspannung des Pixels mit einer angestrebten Einrichtungsgenauigkeit eingestellt ist,
- Öffnen des zweiten Schalters (5) im Anschluss an das Öffnens des ersten Schalters (7), und
- Digitalisieren des Wertes des Potenzials des Ausleseknotens (SN) am Ausgang (2b) des Pixels, wenn der erste und der zweite Schalter geöffnet sind, wobei das Pixel von der Speicherkapazität mit Strom versorgt wird.

2. Verfahren nach Anspruch 1, wobei die Polarisationsmittel (8) eine Stromquelle (8a) aufweisen, wobei der Auslesetransistor (14) während des ersten und des zweiten Digitalisierungsschritts geschlossen ist, wobei das Verfahren für jeden Digitalisierung ein Schließen des ersten Schalters (7) während einer Stabilisierungszeitdauer umfasst, die es ermöglicht, die Ausgangsspannung des Pixels mit der angestrebten Genauigkeit einzustellen.

3. Verfahren nach Anspruch 2, wobei die Zeitdauer (t_set) zwischen dem Öffnen des ersten Schalters (t5, t10) und dem Öffnen des zweiten Schalters (t6, t11) bei dem ersten und dem zweiten Digitalisierungsschritt identisch ist.

4. Verfahren nach Anspruch 1, wobei die Polarisationsmittel (8) eine Spannungsquelle (15) umfassen, wobei das Verfahren für jeden Digitalisierung ein Schließen des ersten Schalters (t20, t28) bis zum Erreichen einer angestrebten Einrichtungsgenauigkeit, ein Öffnen des ersten Schalters (t21, t29) bei Erreichen der Genauigkeit und ein Schließen des Auslesetransistors (14) umfasst.

5. Verfahren nach Anspruch 4, wobei die Zeitdauer zwischen dem Schließen des Auslesetransistors (t22, t30) und dem Öffnen des zweiten Schalters (t25, t32) bei dem ersten und dem zweiten Digitalisierungsschritt identisch ist.

6. System zum Auslesen einer Ladung, die in einer Fotodiode (10) eines Pixels (2) enthalten ist, das einen Stromversorgungseingang (2a), einen Ausgang (2b) und einen Ausleseknoten (SN) aufweist, wobei das Auslesesystem ferner Polarisationsmittel (8) des Ausgangs (2b) des Pixels (2), einen ersten Schalter (7), eine Energiespeicherkapazität (6) und Steuermittel (9) aufweist, wobei der Ausgang (2b) des Pixels (2) über den ersten Schalter (7) mit den Polarisationsmitteln (8) verbunden ist, wobei das Pixel ferner einen Folgetransistor (13), ein mit dem Ausleseknoten (SN) verbundenes Gate und ein mit dem Stromversorgungseingang (2a) verbundenes Drain umfasst, und einen Auslesetransistor (14) aufweist, der die Source des Folgetransistors (13) mit dem Ausgang (2b) des Pixels (2) verbindet, wobei der Stromversorgungseingang (2a) mit der Energiespeicherkapazität (6) und mit einem ersten Ende eines zweiten Schalters (5) verbunden ist, wobei das zweite Ende des zweiten Schalters (5) zur Verbindung mit einer Gleichspannungsquelle (100) und Steuermitteln (9) bestimmt ist, wobei die Steuermittel für Folgendes konfiguriert sind:
∘ bei einem ersten Digitalisierungsschritt, Durchführen eines Digitalisierungs eines ersten Wertes des Potenzials des Ausleseknotens (SN),
∘ Übertragen der in der Fotodiode (10) enthaltenen Ladung (23, 26) an den Ausleseknoten (SN) im Anschluss an den ersten Digitalisierung,
∘ bei einem zweiten Digitalisierungsschritt, Durchführen eines zweiten Digitalisierungs eines zweiten Wertes des Potenzials des Ausleseknotens (SN), der die übertragene Ladung aufweist,
∘ wobei bei dem ersten und dem zweiten Digitalisierungsschritt die Steuermittel ferner für Folgendes konfiguriert sind:
- Schließen des zweiten Schalters (5), um die Energiespeicherkapazität (6) aufzuladen,
- gleichzeitig mit dem Schließen des zweiten Schalters (5), Schließen des ersten Schalters (7) und dann Öffnen des ersten Schalters nach dem Schließen des ersten Schalters, wenn die Ausgangsspannung des Pixels genau auf die angestrebte Einrichtungsgenauigkeit eingestellt ist,
- Öffnen des zweiten Schalters (5) im Anschluss an das Öffnens des ersten Schalters (7), und
- wobei der erste und der zweite Digitalisierung des Wertes des Potenzials des Ausleseknotens (SN) am Ausgang (2b) des Pixels durchgeführt wird, wenn der erste und der zweite Schalter (5) geöffnet sind, wobei das Pixel von der Speicherkapazität mit Strom versorgt wird.

7. System nach Anspruch 6, wobei die Polarisationsmittel (8) eine Stromquelle (8a) aufweisen, wobei die Steuermittel (9) so konfiguriert sind, dass sie den Auslesetransistor (14) schließen und für jeden Digitalisierung den ersten Schalter (7) während einer Stabilisierungszeitdauer schließen, die es ermöglicht, die Ausgangsspannung des Pixels mit der angestrebten Genauigkeit einzustellen.

8. System nach Anspruch 7, wobei die Zeitdauer (t_set) zwischen dem Öffnen des ersten Schalters (7) und dem Öffnen des zweiten Schalters (5) bei dem ersten und dem zweiten Digitalisierungsschritt identisch ist.

9. System nach Anspruch 6, wobei die Polarisationsmittel (8) eine Spannungsquelle (15) aufweisen, wobei die Steuermittel (9) für jeden Digitalisierung so konfiguriert sind, dass sie den ersten Schalter (7) schließen, bis eine angestrebte Einrichtungsgenauigkeit erreicht ist, den ersten Schalter (7) öffnen, wenn diese Genauigkeit erreicht ist, und den Auslesetransistor (14) schließen.

10. System nach Anspruch 9, wobei die Zeitdauer zwischen dem Schließen des Auslesetransistors (14) und dem Öffnen des zweiten Schalters (5) bei dem ersten und dem zweiten Digitalisierungsschritt identisch ist.

11. Pixelspalte (1), die ein System nach einem der Ansprüche 6 bis 10 und mindestens ein zweites Pixel (3) umfasst, das mit dem ersten Pixel (2) identisch ist, wobei der Ausgang (3b) des zweiten Pixels (3) über den ersten Schalter (7) mit den Polarisationsmitteln (8) verbunden ist, wobei der Stromversorgungseingang (3a) des zweiten Pixels (3) mit der Energiespeicherkapazität (6) und mit dem ersten Ende (5a) des zweiten Schalters (5) verbunden ist.

12. Pixelmatrix, die mindestens eine erste Pixelspalte nach Anspruch 11 und eine zweite Pixelspalte nach Anspruch 11 umfasst.

13. Matrix nach Anspruch 12, wobei die Energiespeicherkapazität der ersten Pixelspalte und die Energiespeicherkapazität der zweiten Pixelspalte zu einer gemeinsamen Speicherkapazität (600) zusammengefasst sind.

## Claims

1. Method for reading a charge contained in a photodiode (10) of a pixel (2) comprising a supply input (2a), an output (2b) and a reading node (SN), the output (2b) of the pixel being connected to means (8) for biasing the output (2b) of the pixel (2) by means of a first switch (7), the pixel further comprising a follower transistor (13) comprising a gate connected to the reading node (SN) and a drain connected to the supply input, a reading transistor (14) connecting the source of the follower transistor (13) to the output (2b) of the pixel (2), the supply input being connected to an energy storage capacitor (6) and to a DC voltage source (100) by means of a second switch (5), the method comprising:
∘ a first step of digitising a first value of the potential of the reading node (SN),
∘ a transfer of the charge (23, 26) contained in the photodiode (10) to the reading node (SN) following the first digitisation,
∘ a second step of digitising a second value of the potential of the reading node (SN) comprising the transferred charge,
∘ the first and second digitisation steps comprising:
- closing the second switch (5) to charge the energy storage capacitor (6),
- simultaneously with the closure of the second switch (5), closing the first switch (7) followed by opening the first switch when the output voltage of the pixel is established to within a required establishment accuracy,
- opening the second switch (5) following opening of the first switch (7), and
- digitising the value of the potential of the reading node (SN) on the output (2b) of the pixel when the first and second switches are open, the pixel being supplied by the storage capacitor.

2. Method according to Claim 1, the biasing means (8) comprising a current source (8a) and, the reading transistor (14) being closed during the first and second digitisation steps, the method comprising, for each digitisation, closing the first switch (7) for a stabilisation period allowing establishing the output voltage of the pixel to within a required accuracy.

3. Method according to Claim 2, wherein the period (t_set) between opening of the first switch (t5, t10) and opening of the second switch (t6, t11) is identical during the first and second digitisation steps.

4. Method according to Claim 1, the biasing means (8) comprising a voltage source (15), the method comprising, for each digitisation, closing the first switch (t20, t28) until a required establishment accuracy is achieved, opening the first switch (t21, t29) when said accuracy is achieved, and closing the reading transistor (14).

5. Method according to Claim 4, wherein the period between closure of the reading transistor (t22, t30) and opening of the second switch (t25, t32) is identical during the first and second digitisation steps.

6. System for reading a charge contained in a photodiode (10) of a pixel (2) comprising a supply input (2a), an output (2b) and a reading node (SN), the reading system furthermore comprising means (8) for biasing the output (2b) of the pixel (2), a first switch (7), an energy storage capacitor (6) and control means (9), the output (2b) of the pixel (2) being connected to the biasing means (8) by means of the first switch (7), the pixel furthermore comprising a follower transistor (13) comprising a gate connected to the reading node (SN) and a drain connected to the supply input (2a), a reading transistor (14) connecting the source of the follower transistor (13) to the output (2b) of the pixel (2), the supply input (2a) being connected to the energy storage capacitor (6) and to a first end of the second switch (5), the second end of the second switch (5) being intended to be connected to a DC voltage source (100), and control means (9), the control means being configured to:
∘ during a first digitisation step, implement a first digitisation of a first value of the potential of the reading node (SN),
∘ transfer the charge (23, 26) contained in the photodiode (10) to the reading node (SN) following the first digitisation,
∘ during a second digitisation step, implement a second digitisation of a second value of the potential of the reading node (SN) comprising the transferred charge,
∘ during the first and second digitisation steps, the control means furthermore being configured to:
- close the second switch (5) to charge the energy storage capacitor (6),
- simultaneously with the closure of the second switch (5), close the first switch (7) and then open the first switch following closure of the first switch when the output voltage of the pixel is established to within a required establishment accuracy,
- open the second switch (5) following opening of the first switch (7), and
- the first and second digitisations of the value of the potential of the reading node (SN) on the output (2b) of the pixel being performed when the first and second switches (5) are open, the pixel being supplied by the storage capacitor.

7. System according to claim 6, wherein the biasing means (8) comprise a current source (8a), the control means (9) being configured to close the reading transistor (14) and, for each digitisation, to close the first switch (7) during a stabilisation period for establishing the output voltage of the pixel to within a required precision.

8. System according to Claim 7, wherein the period (t_set) between opening of the first switch (7) and opening of the second switch (5) is identical during the first and second digitisation steps.

9. System according to Claim 6, wherein the biasing means (8) comprise a voltage source (15), the control means (9) being configured, for each digitisation, to close the first switch (7) until a required establishment accuracy is achieved, to open the first switch (7) when said accuracy is achieved, and to close the reading transistor (14).

10. System according to Claim 9, wherein the period between closure of the reading transistor (14) and opening of the second switch (5) is identical during the first and second digitisation steps.

11. Column (1) of pixels comprising a system according to one of Claims 6 to 10 and at least one second pixel (3) identical to the first pixel (2), the output (3b) of the second pixel (3) being connected to the biasing means (8) by means of the first switch (7), the supply input (3a) of the second pixel (3) being connected to the energy storage capacitor (6) and to the first end (5a) of the second switch (5).

12. Array of pixels comprising at least one first column of pixels according to Claim 11 and a second column of pixels according to Claim 11.

13. Array according to Claim 12, wherein the energy storage capacitor of the first column of pixels and the energy storage capacitor of the second column of pixels are grouped together in a common storage capacitor (600).
